# EUROPÄISCHE PATENTSCHRIFT

(11) **EP 1 621 286 B1**
(45) Veröffentlichungstag und Bekanntmachung des Hinweises auf die Patenterteilung: **25.07.2018**
(21) Anmeldenummer: 05012959.2
(22) Anmeldetag: 16.06.2005
(51) Int. Cl.: B23Q 11/04, B23Q 5/36, B25H 1/00, B23B 35/00

(54) **Bohrmaschine, insbesondere Kernlochbohrmaschine**
Drilling machine in particular core drilling machine
Machine de carottage

(30) Priorität: 02.07.2004 DE 102004033361
(43) Veröffentlichungstag der Anmeldung: 01.02.2006
(73) Patentinhaber: C. & E. Fein GmbH, 73529 Schwäbisch-Gmünd-Bargau (DE)
(72) Erfinder: Wiehler, Jürgen, 72829 Engstingen (DE); Bortz, Jörg, 72805 Lichtenstein (DE); Schellhammer, Kurt, 72108 Rottenburg (DE); Beichter, Martin, 70195 Stuttgart (DE)
(74) Vertreter: Roos, Michael

(56) Entgegenhaltungen:
- DE-A1- 1 935 804
- DE-A1- 4 102 200
- DE-A1- 19 629 623
- DE-A1- 19 904 117
- JP-A- 8 108 306
- JP-A- 2000 094 206
- US-A- 4 624 607
- US-A- 4 789 274
- US-A- 5 035 549
- US-A- 5 152 641

## Beschreibung

Die Erfindung betrifft eine Kernlochbohrmaschine gemäß dem Oberbegriff des Anspruchs 1 mit einem Ständer, an dem ein Schlitten geführt ist, der mittels eines Antriebes in einer Arbeitsrichtung entlang einer Führung bewegbar ist, wobei an dem Schlitten eine Bohreinheit mit einer von einem Motor angetriebenen Spindel zum Antrieb eines Bohrwerkzeuges aufgenommen ist, wobei der Antrieb mit einer Zwischenwelle koppelbar ist, über die der Schlitten antreibbar ist, und wobei an der Zwischenwelle (38) ein Stößel (62) aufgenommen ist, der zwischen einer ersten Position, in der eine Antriebsbewegung des Antriebs über den Stößel auf die Zwischenwelle übertragen wird, und einer zweiten Position, in der keine Übertragung einer Drehbewegung vom Antrieb auf die Zwischenwelle erfolgt, axial verschieblich ist. Eine derartige Bohrmaschine ist aus der US-A-5 035 549 bekannt.
Es handelt sich hierbei um eine Kernlochbohrmaschine, bei welcher die Zwischenwelle zum Umschalten zwischen einem automatischen Vorschub und einem manuell über einen Hebel aufgebrachten Vorschub ermöglicht.
Ferner ist es bei einem NC-gesteuerten ortsfesten Bohrwerk bekannt, den Bohrer wiederholt auf ein Werkstück abzusenken, um es in eine bestimmte Schnitttiefe zu schneiden (DE 199 04 117 A1).
Ferner sind Kernbohrmaschinen mit einem Schrittmotor zum Vorschubantrieb sind aus der JP 2000 094 206 A und der JP 08 108 306 A bekannt.
Aus der DE 4 019 515 A1 ist eine Magnetfußbohreinheit bekannt, mit einem Rahmen und einem Magnetfuß, der magnetisch an einem Werkstück haftet, mit einer elektrischen Bohrmaschine mit einem Bohrmotor und einem Vorschubmotor in Form eines Gleichspannungsmotors, der am Rahmen zum Vorschub des Bohrers auf das Werkstück zu und zurück aufgenommen ist, wobei ein Regler vorgesehen ist, der Lochbohrenderfassungsmittel zum Erfassen der Beendigung des Lochbohrens am Werkstück aufweist, Vorschubmotorumkehrmittel zum Umkehren der Bewegungsrichtung des Vorschubmotors aufweist, sowie Sicherheitsschaltungsmittel aufweist, um den Bohrmotor und den Vorschubmotor im Falle der Erfassung eines Überlastzustandes abzuschalten.

Bei einer aus der DE 3 708 038 A1 bekannten Bohrmaschine ist ein Bohrkopf vorgesehen, ein mit dem Bohrkopf zu dessen Antrieb verbundenen Antriebsmotor, eine Stromversorgungseinrichtung zur Stromversorgung des Antriebsmotors und ein Vorschubmotor in Form eines Reihenschlussmotors für das Verschieben des Bohrkopfes in Bezug auf das Werkstück.

Wiederum ist zur Vermeidung eines Überlastzustandes eine Steuerungseinrichtung vorgesehen, mit einer Messeinrichtung zum Messen des dem Antriebsmotor zugeführten Stroms, einer Speichereinrichtung zum Speichern eines Strommesswerts, der gemessen wird, wenn der Bohrkopf außer Eingriff mit dem Werkstück steht, und eine Erfassungseinrichtung mit der aus einem gegenwärtigen Strommesswert und dem gespeicherten Strommesswert erfassbar ist, ob ein Bohrvorgang beendet ist oder nicht.

Auch der Aufbau dieser Bohrmaschine ist relativ aufwändig und kompliziert.

Aus der DE 41 02 200 A1 ist eine Bohrmaschine mit Magnetfuß bekannt, bei welchem die Zustellbewegung des Schlittens intermittierend unterbrochen wird. Durch die Unterbrechung der Zustellbewegung soll der Span gebrochen werden.

Vor diesem Hintergrund liegt der Erfindung die Aufgabe zugrunde, eine Kernlochbohrmaschine, anzugeben, bei der mit relativ einfachen Mitteln eine Überlastung der Bohreinheit durch einen zu hohen Vorschub vermieden und eine einfache, schnelle Handhabung bei einem guten Bohrergebnis ermöglicht wird.

Diese Aufgabe wird durch eine Bohrmaschine gemäß Anspruch 1 gelöst,

Die Aufgabe der Erfindung wird auf diese Weise vollkommen gelöst.

Erfindungsgemäß werden beim Bohren von Metall die erzeugten Späne gebrochen und von Zeit zu Zeit aus der Kernlochbohrung durch das perodische Zurückfahren des Schlittens entgegen der Arbeitsrichtung entfernt. Auf diese Weise wird der Bohrvorgang verbessert und es werden Probleme und Gefahren durch scharfkantige Späne vermieden.

Ferner ist vorzugsweise ein Schneckengetriebe vorgesehen, über das der Schrittmotor mit der Zwischenwelle koppelbar ist.

Durch diese Merkmale wird eine geeignete Untersetzung des Vorschubes gewährleistet und ein einfacher Aufbau ermöglicht.

In zusätzlicher Weiterbildung dieser Ausführung ist das Schneckengetriebe über die Zwischenwelle mit einem Ritzel koppelbar, das mit einer am Ständer vorgesehenen Zahnstange kämmt.

Auf diese Weise lässt sich der Vorschub des Schrittmotors in geeigneter Weise in einen Vorschub des Schlittens entlang des Ständers umsetzen.

Hierbei ist vorzugsweise ein Hebel mit der Zwischenwelle gekoppelt, der eine manuelle Drehung der Zwischenwelle erlaubt.

Mittels des Hebels kann dann eine Umstellung zwischen manuellem Vorschub und automatisch vom Schrittmotor erzeugtem Vorschub erfolgen, indem der Stößel axial verschoben wird.

Hierzu kann der Hebel als Drehkreuz mit drei gelenkig an der Zwischenwelle gelagerten, um 120° zueinander versetzten Griffteilen ausgebildet sein, deren Enden an einem Ende des Stößels angreifen, um eine axiale Verschiebung des Stößels zwischen der ersten Position und der zweiten Position durch Verkippung der Griffteile zu erlauben.

Vorzugsweise weist hierbei das Schneckengetriebe eine vom Schrittmotor angetriebene Schnecke auf, die mit einem Schneckenrad im Eingriff steht, das über Rollkörper mit dem Stößel und über diesen mit der Zwischenwelle zu deren Drehantrieb koppelbar ist.
Bevorzugt ist hierbei zwischen Stößel und Zwischenwelle ein federbeaufschlagtes Druckstück gehalten, über das die Rollkörper in der ersten Position des Stößels zum Eingriff in Mitnahmevertiefungen des Schneckenrads vorgespannt werden.
Durch diese Maßnahmen lässt sich eine einfache Umschaltung zwischen einem manuell über den Hebel erzeugten Vorschub und einem automatisch vom Schrittmotor erzeugten Vorschub erreichen. Zur Umschaltung muss hierbei lediglich der Hebel bzw. eines der Griffteile des Hebels verkippt werden.
Gemäß einer Variante dieser Ausführung weist der Stößel einen Bund auf, über den die Rollkörper zwischen der ersten Position zur Mitnahme der Zwischenwelle und der zweiten Position, in der keine Mitnahme der Zwischenwelle durch den Antrieb erfolgt, verschiebbar sind.
Hierbei kann ein Federelement zur Vorspannung des Stößels in die zweite Position zwischen dem Bund und einer Anschlagfläche der Zwischenwelle gehalten sein.
In weiter bevorzugter Ausgestaltung der Erfindung weist die Bohreinheit ein Dreiganggetriebe zum Antrieb des Bohrwerkzeuges auf.
Durch diese Maßnahme wird eine verbesserte Anpassung der Bohrerdrehzahl an verschiedene Betriebszustände ermöglicht.

Weitere Merkmale und Vorteile der Erfindung ergeben sich aus der nachfolgenden Beschreibung eines bevorzugten Ausführungsbeispiels unter Bezugnahme auf die Zeichnung. Es zeigen:
- Fig. 1: eine perspektivische Ansicht einer erfindungsgemäßen Bohrmaschine, bei der im Bereich der Zwischenwelle zur Übertragung der Drehbewegung vom Vorschubantrieb auf den Schlitten die äußeren Teile zwecks der besseren Erkennbarkeit freigeschnitten sind;
- Fig. 2: einen vergrößerten Teilschnitt durch die Zwischenwelle im Bereich des Schneckengetriebes mit den zugeordneten Griffteilen des Hebels zum manuellen Antrieb;
- Fig. 3: einen vergrößerten Teilschnitt durch die Zwischenwelle im Bereich des Schneckengetriebes in einer gegenüber der Ausführung gemäß Fig. 2 abgewandelten Ausführungsform in einer Position, in der keine Mitnahme zwischen Schneckengetriebe und Zwischenwelle erfolgt und
- Fig. 4: eine abgewandelte Position der Ausführung gemäß Fig. 3, in der eine Mitnahme zwischen Schneckengetriebe und Zwischenwelle erfolgt.

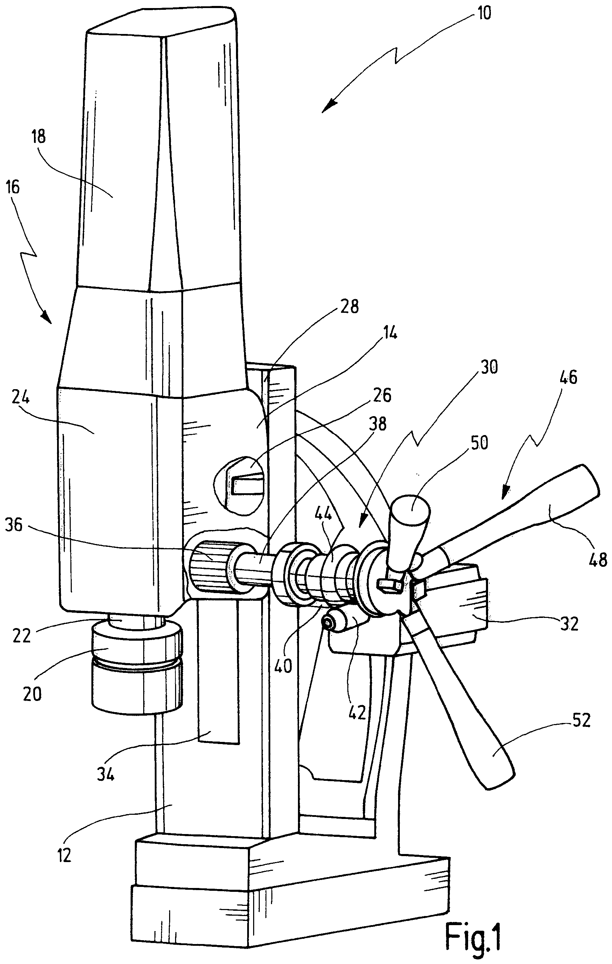

In Fig. 1 ist eine erfindungsgemäße Bohrmaschine insgesamt mit der Ziffer 10 bezeichnet.

Bei der erfindungsgemäßen Bohrmaschine 10 handelt es sich um eine Kernlochbohrmaschine mit einem Ständer 12, an dem eine Bohreinheit 16 an einem Schlitten 14 aufgenommen ist, der mittels eines Antriebes 30 entlang einer Führung 28 bewegbar ist. Die Bohreinheit 16 weist einen Motor 18 in Form eines Universalmotors auf, der über ein Dreigang-Getriebe 24 eine Spindel 22 zum Antrieb eines Bohrwerkzeuges 20 antreibt. Zum Einstellen der verschiedenen Übersetzungsverhältnisse ist ein Wählhebel 26 drehbar am Gehäuse der Bohreinheit 16 aufgenommen.

Zum Vorschub der Bohreinheit 16 bzw. des Schlittens 14 ist am Schlitten 14 eine Zahnstange 34 aufgenommen, die über ein am Ständer 12 drehbar gelagertes Ritzel 36 antreibbar ist, wie im Einzelnen noch nachfolgend beschrieben wird.

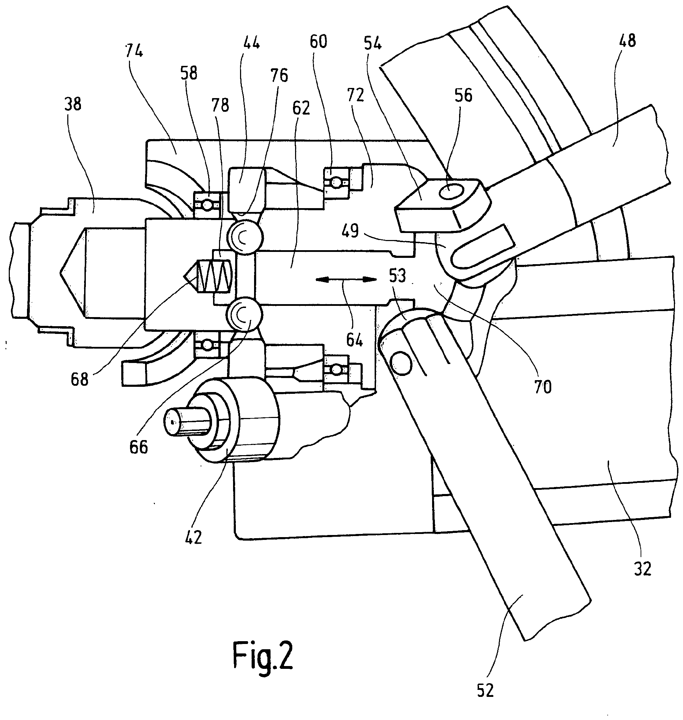

Das Ritzel 36 ist entweder von einem Antrieb 30 mittels eines Schrittmotors 32 automatisch antreibbar oder aber mittels eines Drehkreuzes 46 manuell. Um eine Umschaltung zwischen dem automatischen Antrieb über den Schrittmotor 32 und dem manuellen Antrieb mittels des Drehkreuzes 46 zu ermöglichen, ist ein Stößel 62 axial verschieblich mit der Zwischenwelle 38 gekoppelt. Das Drehkreuz 46 weist drei um 120° zueinander versetzt aufgenommene Griffteile 48 auf, die verschwenkbar angeordnet sind und drehfest mit der Zwischenwelle 38 gekoppelt sind. Aus Fig. 2 ist erkennbar, wie die Griffteile 48, 52 mit ihren Enden 49 bzw. 53 an zugeordneten Trägern 54 mittels Stiften 56 verschwenkbar gehalten sind. Die Enden 49 bzw. 53 der Griffteile 48 bzw. 52 wirken mit einem axialen Ende 70 des Stößels 62 zusammen. Durch Verkippen eines der Griffteile 48, 50, 52 lässt sich so der Stößel 62 zwischen einer ersten Position und zwischen einer zweiten, in Fig. 2 gezeigten Position axial verschieben, wie durch den Doppelpfeil 64 angedeutet ist. In beiden Positionen wird eine Drehbewegung des Drehkreuzes 46 bzw. der einzelnen Griffteile 48, 50, 52 auf die Zwischenwelle 38 übertragen und somit in eine Verschiebung der Bohreinheit 16 umgesetzt. Während in der zweiten in Fig. 2 dargestellten Position des Stößels 62 eine vom Schrittmotor 32 erzeugte Vorschubbewegung nicht auf die Zwischenwelle 38 übertragen wird, erfolgt in der ersten Position jedoch eine Mitnahme der Zwischenwelle 38, wenn der Schrittmotor 32 angetrieben wird.

Der Schrittmotor 32 ist über ein Schneckengetriebe 40 mit der Zwischenwelle 38 koppelbar. Hierzu ist eine Schnecke 42 vom Schrittmotor 32 angetrieben, die mit einem Schneckenrad 44 im Eingriff steht, das an der Zwischenwelle 38 drehbar gelagert ist. Zur Übertragung einer vom Schneckenrad 44 ausgeführten Drehbewegung auf die Zwischenwelle 38 sind im Schneckenrad 44 Mitnahmevertiefungen 76 vorgesehen, in die Rollkörper 66 in Form von Kugeln eingreifen können, um eine formschlüssige Verbindung zwischen Schneckenrad 44 und Zwischenwelle 38 herzustellen. Während die Rollkörper 66 in der in Fig. 2 gezeigten zweiten Position lediglich auf einer Umfangsnut des Stößels 62 umlaufen, können die Rollkörper 66 in der ersten Position des Stößels 62 über ein federbeaufschlagtes Druckstück 78 radial nach außen gedrückt werden, bis sie von den Mitnahmevertiefungen 76 des Schneckenrades 44 zur formschlüssigen Kopplung mit der Zwischenwelle 38 mitgenommen werden. Befindet sich der Stößel 62 somit in der ersten Position, wird eine vom Schrittmotor 32 ausgeführte Drehbewegung, die auf das Schneckenrad 44 übertragen wird, in eine Drehbewegung der Zwischenwelle 38 umgesetzt. In diesem Fall dreht sich das Drehkreuz 46 auch während des Antriebs durch den Schrittmotor 32 mit.

Befindet sich dagegen der Stößel 62 in der zweiten Position, so lässt sich die Zwischenwelle 38 lediglich mit Hilfe des Drehkreuzes 46 manuell drehen, um so eine manuelle Verstellung der Bohreinheit 16 zu erlauben, also insbesondere eine manuelle Zustellung an ein zu bohrendes Werkstück. Anschließend wird durch Verschwenken eines der Griffteile 48, 50, 52 der Stößel 62 in die erste Position bewegt, bis die Rollkörper 66 vom Druckstück 78 in die Mitnahmevertiefungen 76 vorgespannt werden und die diese gelangen können, um so die Zwischenwelle 38 und damit das Ritzel 36 mitzunehmen.

Der als Schrittmotor 32 ausgeführte Antrieb für den automatischen Vorschub der Bohreinheit 16 erlaubt einen automatischen Vorschub der Bohreinheit 16, ohne dass eine Überlastung möglich ist.

In Fig. 2 ist ferner noch erkennbar, wie der Stößel 62 mittels eines Zwischenteils 72 über zwei Lager 58, 60 an einem Gehäuseteil 74 drehbar gelagert ist, das am Ständer 12 befestigt ist und mit dem Schrittmotor 32 verbunden ist.

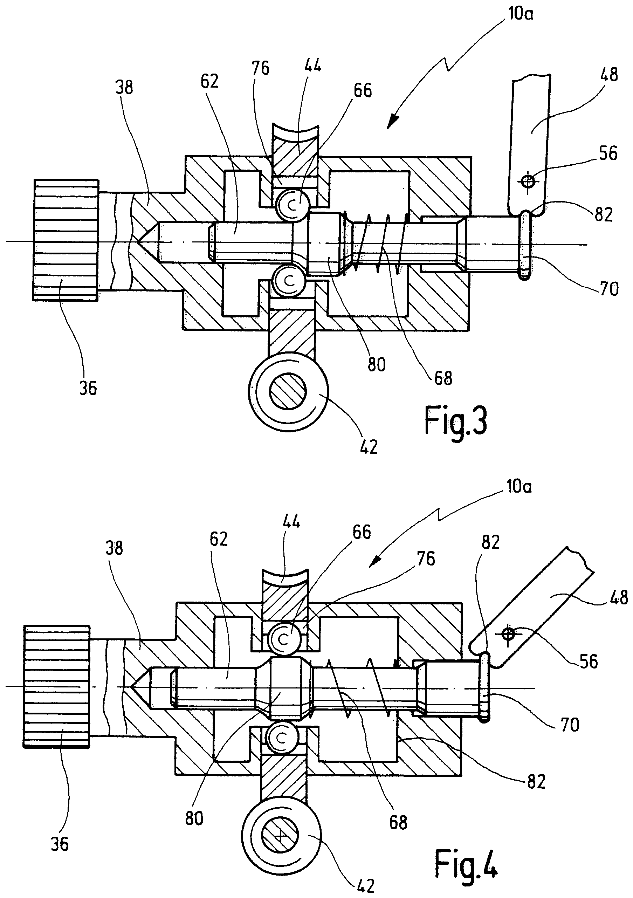

Eine abgewandelte Ausführung der Bohrmaschine ist ausschnittsweise in den Fig. 3 und 4 dargestellt und insgesamt mit 10a bezeichnet. Hierbei werden für entsprechende Teile gleiche Bezugsziffern verwendet.

Das Prinzip der Verstellung zwischen einer Mitnahmeposition, in der eine Drehbewegung des Schneckengetriebes in eine Drehbewegung der Zwischenwelle 38 umgesetzt wird, und einer Position, in der keine Mitnahme erfolgt, ist unverändert. Im Unterschied zu der Ausführung gemäß der Fig. 1 und 2 ist ein Federelement 68 für die Vorspannung der Zwischenwelle 38 nunmehr auf der anderen Seite des Schneckengetriebes 40 zwischen einer dem Ritzel 36 abgewandten Anschlagfläche 82 der Zwischenwelle 38 und einem Bund 80 der Zwischenwelle 38 gehalten. Das Federelement 68 spannt den Stößel 62 in die in Fig. 4 gezeigte Position vor. In dieser Position sind die Griffteile 48 des Drehkreuzes geneigt, und die Rollkörper 66 greifen in Aussparungen 76 des Schneckenrades 44 ein, um eine Mitnahme zwischen Schneckenrad 44 und Zwischenwelle 38 zu bewirken.

In der Darstellung gemäß Fig. 3 liegen dagegen die Rollkörper 66 auf der Außenoberfläche des Stößels 62 am Bund 80 an, so dass keine Mitnahme zwischen Schneckenrad 44 und Zwischenwelle 38 erfolgt. In dieser Position stehen die Griffteile 48 des Drehkreuzes nahezu senkrecht. Am Ende jedes Griffteils 48 ist eine Mitnahmenut 82 vorgesehen, die mit einem Bund 70 am Ende des Stößels 62 zur Mitnahme zusammenwirkt.

## Patentansprüche

1. Kernlochbohrmaschine, mit einem Ständer (12), an dem ein Schlitten (14) geführt ist, der mittels eines Antriebes (30) in einer Arbeitsrichtung entlang einer Führung (28) bewegbar ist, wobei an dem Schlitten (14) eine Bohreinheit (16) mit einer von einem Motor (18) angetriebenen Spindel (22) zum Antrieb eines Bohrwerkzeuges (20) aufgenommen ist, , wobei der Antrieb (30) mit einer Zwischenwelle (38) koppelbar ist, über die der Schlitten (28) antreibbar ist, und wobei an der Zwischenwelle (38) ein Stößel (62) aufgenommen ist, der zwischen einer ersten Position, in der eine Antriebsbewegung des Antriebs (30) über den Stößel (62) auf die Zwischenwelle (38) übertragen wird, und einer zweiten Position, in der keine Übertragung einer Drehbewegung vom Antrieb (30) auf die Zwischenwelle (38) erfolgt, axial verschieblich ist, **dadurch gekennzeichnet, dass** der Antrieb (30) einen Schrittmotor (32) aufweist, und dass der Antrieb (30) Mittel zum periodischen Zurückfahren des Schlittens (28) entgegen der Arbeitsrichtung aufweist.

2. Bohrmaschine nach einem der vorhergehenden Ansprüche, **dadurch gekennzeichnet, dass** der Schrittmotor (32) über ein Schneckengetriebe (40) mit der Zwischenwelle (38) koppelbar ist.

3. Bohrmaschine nach Anspruch 2, **dadurch gekennzeichnet, dass** das Schneckengetriebe (40) über die Zwischenwelle (38) mit einem Ritzel (36) koppelbar ist, das mit einer am Schlitten (14) vorgesehenen Zahnstange (34) kämmt.

4. Bohrmaschine nach einem der vorhergehenden Ansprüche, **dadurch gekennzeichnet, dass** ein Hebel (46) mit der Zwischenwelle (38) gekoppelt ist, der eine manuelle Drehung der Zwischenwelle (38) erlaubt.

5. Bohrmaschine nach Anspruch 4, **dadurch gekennzeichnet, dass** der Hebel (46) als Drehkreuz mit drei gelenkig an der Zwischenwelle gelagerten um 120° zueinander versetzten Griffteilen (48, 50, 52) ausgebildet ist, deren Enden (49, 53) an einem Ende (70) des Stößels (62) angreifen, um eine axiale Verschiebung des Stößels (62) zwischen der ersten Position und der zweiten Position durch Verkippung der Griffteile (48, 50, 52) zu erlauben.

6. Bohrmaschine nach einem der Ansprüche 2 bis 5, **dadurch gekennzeichnet, dass** das Schneckengetriebe (40) eine vom Schrittmotor (32) angetriebene Schnecke (42) aufweist, die mit einem Schneckenrad (44) im Eingriff steht, das über Rollkörper (66) mit der Zwischenwelle (38) zu deren Drehantrieb koppelbar ist.

7. Bohrmaschine nach Anspruch 6, **dadurch gekennzeichnet, dass** zwischen Stößel (62) und Zwischenwelle (38) ein Federelement (68) gehalten ist, über das die Rollkörper (66) in der ersten Position zum Eingriff in Mitnahmevertiefungen (76) des Schneckenrades (44) zur formschlüssigen Mitnahme der Zwischenwelle (38) vorgespannt sind.

8. Bohrmaschine nach Anspruch 6 oder 7, **dadurch gekennzeichnet, dass** der Stößel (38) einen Bund (80) aufweist, über den die Rollkörper (66) zwischen der ersten Position zur Mitnahme der Zwischenwelle (38) und der zweiten Position, in der keine Mitnahme der Zwischenwelle (38) durch den Antrieb erfolgt, verschiebbar sind.

9. Bohrmaschine nach Anspruch 8, **dadurch gekennzeichnet, dass** zwischen dem Bund (80) und einer Anschlagfläche (82) der Zwischenwelle (38) ein Federelement (68) zur Vorspannung des Stößels (62) in die zweite Position gehalten ist.

10. Bohrmaschine nach einem der vorhergehenden Ansprüche, **dadurch gekennzeichnet, dass** die Bohreinheit (16) ein Dreiganggetriebe (24) zum Antrieb eines Bohrwerkzeuges (20) aufweist.

## Claims

1. Core drilling machine, having a stand (12), on which a carriage (14) is guided, said carriage being movable by means of a drive (30) in a working direction along a guide (28), wherein there is accommodated on the carriage (14) a drilling unit (16) with a spindle (22), driven by a motor (18), to drive a drilling tool (20), wherein the drive (30) can be coupled with an intermediate shaft (38), by way of which the carriage (28) is drivable, and wherein there is accommodated on the intermediate shaft (38) a plunger (62), which is axially displaceable between a first position, within which a driving motion of the drive (30) is transferred onto the intermediate shaft (38) by way of the plunger (62), and a second position, in which there is no transfer of rotary motion from the drive (30) to the intermediate shaft (38), **characterised in that** the drive (30) has a stepper motor (32) and that the drive (30) has means for the periodic return of the carriage (28) oppositely to the working direction.

2. Drilling machine according to any one of the preceding claims, **characterised in that** the stepper motor (32) can be coupled with the intermediate shaft (38) by way of a worm gear pair (40).

3. Drilling machine according to claim 2, **characterised in that** the worm gear pair (40) can be coupled with a pinion (36) by way of the intermediate shaft (38), said pinion engaging with a toothed rack (34) provided on the carriage (14).

4. Drilling machine according to any one of the preceding claims, **characterised in that** a handle (46) is coupled with the intermediate shaft (38), said handle allowing manual rotation of the intermediate shaft (38).

5. Drilling machine according to claim 4, **characterised in that** the handle (46) is configured as star handle with three gripping parts (48, 50, 52) mounted pivotably on the intermediate shaft and offset by 120° with respect to one another, the ends thereof (49, 53) cooperating with one end (70) of the plunger (62), in order to allow an axial displacement of the plunger (62) between the first position and the second position through tilting of the gripping parts (48, 50, 52).

6. Drilling machine according to any one of claims 2 to 5, **characterised in that** the worm gear pair (40) has a worm (42) driven by the stepper motor (32), said worm engaging with a worm wheel (44), which can be coupled by way of roller bodies (66) with the intermediate shaft (38) in order to drive it in a rotary way.

7. Drilling machine according to claim 6, **characterised in that** there is held, between plunger (62) and intermediate shaft (38), a spring element (68), by way of which the roller bodies (66) are pretensioned in the first position for engagement in catching recesses (76) of the worm wheel (44) for positively catching the intermediate shaft (38).

8. Drilling machine according to claim 6 or 7, **characterised in that** the plunger (38) has a collar (80), by way of which the roller bodies (66) are displaceable between the first position for catching the intermediate shaft (38) and the second position, in which there is no catching of the intermediate shaft (38) by the drive.

9. Drilling machine according to claim 8, **characterised in that** a spring element (68) is held between the collar (80) and a stop surface (82) of the intermediate shaft (38), to pretension the plunger (62) into the second position.

10. Drilling machine according to any one of the preceding claims, **characterised in that** the drilling unit (16) has a three-speed gear (24) to drive a drilling tool (20).

## Revendications

1. Machine de perçage d'avant-trou, avec un support (12), sur lequel est guidé un chariot (14) qui est mobile le long d'un guide (28) au moyen d'un entraînement (30) dans une direction de travail,
dans lequel une unité de perçage (16) est logée au niveau du chariot (14) avec une broche (22) entraînée par un moteur (18) afin d'entraîner un outil de perçage (20),
dans lequel l'entraînement (30) peut être couplé à un arbre intermédiaire (38) par l'intermédiaire duquel le chariot (28) peut être entraîné
et dans lequel est logé au niveau de l'arbre intermédiaire (38) un coulisseau (62) qui est déplaçable de façon axiale entre une première position, dans laquelle un mouvement d'entraînement de l'entraînement (30) est transmis par l'intermédiaire du coulisseau (62) à l'arbre intermédiaire (38), et une deuxième position, dans laquelle aucune transmission d'un mouvement rotatif de l'entraînement (30) à l'arbre intermédiaire (38) ne s'effectue, **caractérisée en ce que** l'entraînement (30) comporte un moteur pas à pas (32) et **en ce que** l'entraînement (30) comporte des moyens pour le retour périodique du chariot (28) à l'opposé de la direction de travail.

2. Machine de perçage selon l'une quelconque des revendications précédentes, **caractérisée en ce que** le moteur pas à pas (32) peut être couplé à l'arbre intermédiaire (38) par l'intermédiaire d'un engrenage à vis sans fin (40).

3. Machine de perçage selon la revendication 2, **caractérisée en ce que** l'engrenage à vis sans fin (40) peut être couplé par l'intermédiaire de l'arbre intermédiaire (38) à un pignon (36) qui s'engrène dans une crémaillère (34) prévue au niveau du chariot (14).

4. Machine de perçage selon l'une quelconque des revendications précédentes, **caractérisée en ce qu'**un levier (46) est couplé à l'arbre intermédiaire (38), lequel levier permet une rotation manuelle de l'arbre intermédiaire (38).

5. Machine de perçage selon la revendication 4, **caractérisée en ce que** le levier (46) est réalisé comme un tourniquet avec trois poignées (48, 50, 52) qui sont logées de manière articulée au niveau de l'arbre intermédiaire et décalées de 120° les unes par rapport aux autres et dont les extrémités (49, 53) agissent au niveau d'une extrémité (70) du coulisseau (62) pour permettre un déplacement axial du coulisseau (62) entre la première position et la deuxième position en faisant basculer les poignées (48, 50, 52).

6. Machine de perçage selon l'une quelconque des revendications 2 à 5, **caractérisée en ce que** l'engrenage à vis sans fin (40) comporte une vis sans fin (42) qui est entraînée par le moteur pas à pas (32) et qui est en prise avec une roue à denture hélicoïdale (44) qui peut être couplée par l'intermédiaire de galets (66) à l'arbre intermédiaire (38) en vue de son entraînement en rotation.

7. Machine de perçage selon la revendication 6, **caractérisée en ce qu'**un élément formant ressort (68) est maintenu entre le coulisseau (62) et l'arbre intermédiaire (38), élément par l'intermédiaire duquel les galets (66) sont précontraints dans la première position afin d'être pris dans des creux d'entraînement (76) de la roue à denture hélicoïdale (44) dans le but d'entraîner par concordance de forme l'arbre intermédiaire (38).

8. Machine de perçage selon la revendication 6 ou 7, **caractérisée en ce que** le coulisseau (38) comporte un collet (80) par l'intermédiaire duquel les galets (66) sont déplaçables entre la première position pour l'entraînement de l'arbre intermédiaire (38) et la deuxième position dans laquelle ne s'effectue aucun entraînement de l'arbre intermédiaire (38) par l'entraînement.

9. Machine de perçage selon la revendication 8, **caractérisée en ce que**, entre le collet (80) et une surface de butée (82) de l'arbre intermédiaire (38), un élément formant ressort (68) est maintenu dans la deuxième position pour la précontrainte du coulisseau (62).

10. Machine de perçage selon l'une quelconque des revendications précédentes, **caractérisée en ce que** l'unité de perçage (16) comporte un engrenage à trois vitesses (24) pour entraîner un outil de perçage (20).
